# EUROPÄISCHE PATENTANMELDUNG

(11) **EP 3 702 652 A1**
(43) Veröffentlichungstag der Anmeldung: **02.09.2020**
(21) Anmeldenummer: 19184032.1
(22) Anmeldetag: 02.07.2019
(51) Int. Cl.: F16L 3/10, F16L 3/11, H02G 3/32

(54) **ROHRSCHELLE**

(30) Priorität: 27.02.2019 EP 19159646
(71) Anmelder: Gerster, Gaby, 8185 Winkel (CH)
(72) Erfinder: PFLUGER, Gerd, 4625 Oberbuchsiten (CH)
(74) Vertreter: Rutz & Partner

(57) **Zusammenfassung**

Die Rohrschelle (1) umfasst ein Montageteil (2), das der Aufnahme wenigstens eines Rohres (8) in einem Montageraum (10) dient, ein Verschlussteil (3), mittels dessen das Montageteil (2) verschliessbar ist, und ein Arretierteil (4), das einen Niederhalter (42) aufweist, mittels dessen das Rohr (8) im Montageraum (10) arretierbar ist. Erfindungsgemäss ist vorgesehen, dass das Montageteil (2) zumindest annähernd C-förmig ausgebildet ist und ein mit einem ersten Kopplungsteil (211) versehenes Kopfstück (21) und ein mit einem zweiten Kopplungsteil (231) versehenes Fussstück (23), die durch ein Seitenstück (22) miteinander verbunden sind, umfasst und dass das Verschlussteil (3) ein mit dem ersten oder zweiten Kopplungsteil (211, 231) drehbar verbundenes erstes Endstück (31) und ein mit dem zweiten oder ersten Kopplungsteil (231, 211) koppelbares zweites Endstück (32) aufweist.

## Beschreibung

Die Erfindung betrifft eine Rohrschelle für die Installation Rohren und Leitungen.

Rohrschellen und Vorrichtungen zu deren Montage sind z.B. im Produktkatalog der LANZ OENSINGEN AG, Juli 2017, Seite 117, gezeigt.

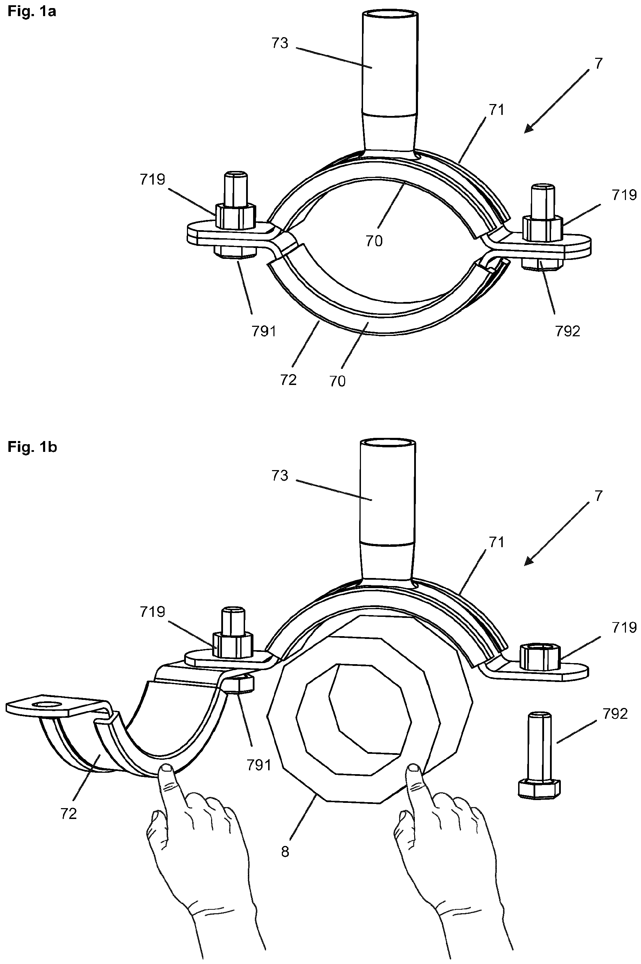

Rohrschellen bestehen üblicherweise aus zwei beidseitig miteinander verbindbaren Schalen, von denen die erste Schale fest montiert und die zweite Schale jeweils einseitig gelöst und weggedreht wird, um ein Rohr in die erste Schale einzulegen und anschliessend mit der zweite Schale zu fixieren, wie dies nachstehend in Fig. 1a und Fig. 1b illustriert ist. Zum Verschliessen der Rohrschelle wird die zweite Schale, die einseitig mittels einer ersten Schraube mit der ersten Schale verbunden ist, zurückgedreht und mittels einer zweiten Schraube auf der anderen Seite mit der ersten Schale verbunden. Beim Zurückdrehen stösst die zweite Schale jedoch regelmässig an das eingesetzte Rohr an und muss daher weiter gelöst oder nach unten gebogen werden, bis die Drehung vollzogen werden kann. Die Manipulation dieser Rohrschelle erfordert daher Geschick, Kraft und Konzentration des Monteurs, der die beschriebenen Manipulationen durchführen und gleichzeitig das eingesetzte Rohr halten muss. Da Rohrschellen oft an exponierten Stellen, z.B. an Decken, und bei mangelhaften Lichtverhältnissen zu montieren sind, sind besondere Vorsichtsmassnahmen zu treffen, damit der Monteur nicht gefährdet wird.

Die beschriebene Rohrschelle ist zudem nur für Rohre in einem engen Bereich eines bestimmten Durchmessers einsetzbar. Sofern der Durchmesser zu gross ist, kann die Rohrschelle nur mit grossem Kraftaufwand und gleichzeitiger Deformation des installierten Rohrs geschlossen werden. Sofern der Rohrdurchmesser hingegen zu klein ist, so wird das Rohr nicht spielfrei gehalten. In diesem Fall können beim Betrieb des Rohrsystems Vibrationen und störende Geräusche auftreten. Durch stete Vibrationen können Anschlussvorrichtungen oder Verbindungsvorrichtungen gelockert werden, sodass regelmässig Wartungsarbeiten erforderlich sind.

Aus der EP2325539A1 ist eine Rohrschelle bekannt, die ein U-Profil-förmiges Montageteil und ein Aufnahmeteil umfasst, die miteinander verbindbar sind. Das Montageteil umfasst eine mit wenigstens einem Montageelement versehene Grundplatte sowie zwei Seitenwände. Das Aufnahmeteil weist ein dem Halten der Leitung dienendes Aufnahmesegment sowie beidseitig nach aussen ragende Verbindungselemente auf, die formschlüssig in Öffnungen in den Seitenwänden des Montageteils eingesetzt werden können. Nachteilig bei dieser Rohrschelle ist, dass die Installation des Aufnahmeteils insbesondere an exponierten Lagen mit Schwierigkeiten verbunden ist. Zuerst muss das Aufnahmeteil entnommen werden, damit z.B. ein Rohr eingesetzt werden kann. Anschliessend muss das Aufnahmeteil mit den Verbindungselementen beidseitig in die Öffnungen der Seitenwände des Montageteils eingeführt werden. Abschliessend ist ein Niederhalter gegen das Rohr zu führen und zu fixieren.

Die beschriebenen Arbeiten sind von einem Monteur, der z.B. auf einer Leiter steht, nur mit Geschick ausführbar. Das Rohr muss mit einer Hand innerhalb des Montageteils gehalten werden, während das Aufnahmeteil mit der anderen Hand mit dem Montageteil verbunden wird Zu beachten ist zudem, dass in Bauten oft schlechte Lichtverhältnisse vorherrschen, sodass das Schliessen der Rohrschelle gegebenenfalls mehrere Versuche erfordert.

Der vorliegenden Erfindung liegt daher die Aufgabe zugrunde, eine verbesserte Rohrschelle zu schaffen, mittels der Rohre, d.h. Leitungen aller Art, vorteilhaft installiert werden können.

Insbesondere ist eine einfach aufgebaute und kostengünstige Rohrschelle zu schaffen, mit der Rohre auch unter erschwerten Installationsbedingungen einfach und schnell montierbar sind.

Der Installationsvorgang soll besonders einfach ausführbar sein. Vorzugsweise soll der Installationsvorgang in wenigen voneinander unabhängigen Installationsschritten ausführbar sein, so dass der Monteur entlastet wird und keine besonderen Sicherheitsmassnahmen erforderlich sind.

Der Vorgang zur Installation oder Deinstallation eines Rohres soll zudem in kürzester Zeit möglich sein.

Die Rohrschelle soll universell einsetzbar sein und erlauben, Rohre mit stark voneinander abweichenden Durchmessern spielfrei, stabil und materialschonend zu halten.

Ferner soll gewährleistet werden, dass die durch den Medientransport in den Rohren verursachte Geräuschentwicklung, unabhängig vom jeweiligen Durchmesser der installierten Rohre, minimal bleibt.

Diese Aufgabe wird mit einer Rohrschelle gelöst, welche die in Anspruch 1 angegebenen Merkmale aufweist. Vorteilhafte Ausgestaltungen der Erfindung sind in weiteren Ansprüchen angegeben.

Die Rohrschelle umfasst ein Montageteil, das der Aufnahme wenigstens eines Rohres in einem Montageraum dient, ein Verschlussteil, mittels dessen das Montageteil verschliessbar ist, und ein Arretierteil, das einen Niederhalter aufweist, mittels dessen das Rohr im Montageraum arretierbar ist.

Erfindungsgemäss ist vorgesehen, dass das Montageteil zumindest annähernd C-förmig ausgebildet ist und ein mit einem ersten Kopplungsteil versehenes Kopfstück und ein mit einem zweiten Kopplungsteil versehenes Fussstück, die durch ein Seitenstück miteinander verbunden sind, umfasst und dass das Verschlussteil ein mit dem ersten oder zweiten Kopplungsteil drehbar verbundenes erstes Endstück und ein mit dem zweiten oder ersten Kopplungsteil koppelbares zweites Endstück aufweist.

Das C-förmig ausgebildete Montageteil kann am Kopfstück oder am Seitenstück mit einem Installationskörper, z.B. der Decke oder einer Wand eines Gebäudes, einer Deckenstütze oder einem Ausleger, verbunden werden. Vorzugsweise ist am Kopfstück oder am Seitenstück eine Montageöffnung vorgesehen, durch die z.B. eine Montageschraube hindurch geführt werden kann.

Vorzugsweise ist die Montageöffnung als Schlüssellochöffnung ausgebildet, sodass die Rohrschelle in einfacher Weise an einer Montageschraube eingehängt und fixiert werden kann. Die Schlüssellochöffnung weist ein Aufnahmeloch mit grösserem Durchmesser und einen Halteschlitz mit geringerem Durchmesser auf. Zwischen dem Aufnahmeloch und dem Halteschlitz sind vorzugsweise Halteelemente vorgesehen. Eine z.B. an einer Decke vormontierte Montageschraube kann durch das Aufnahmeloch hindurch geführt und mit dem Schraubenschaft seitlich in den Halteschlitz eingeführt werden. Bei diesem Vorgang wird der Schraubenkopf über die Halteelemente geführt, die in der Folge verhindern, dass sich der Schraubenkopf zurück zum Aufnahmeloch bewegen kann.

Das C-förmig ausgebildete Montageteil hat den Vorteil, dass nach der Montage der Rohrschelle ein Rohr seitlich in das Montageteil bzw. den Montageraum eingeführt und auf das Fussstück abgelegt werden kann. Der Monteur kann mit einer Hand ein Rohr in die vormontierte Rohrschelle bzw. das Montageteil einlegen und hat seine Hände anschliessend frei für weitere Tätigkeiten.

Zur Sicherung des eingelegten Rohrs wird das mit dem Montageteil verbundene Verschlussteil mit einem Handgriff in die Verschlussstellung gedreht. In der Folge kann das Arretierteil oder der Niederhalter des Arretierteils nach unten gefahren werden, um das eingelegte Rohr zu fixieren.

Der Begriff »Rohre« umfasst Rohre und Leitungen aller Art. Die erfindungsgemässe Rohrschelle erlaubt daher die Installation beliebiger Rohre bzw. Leitungen mit kleinerem oder grösserem Durchmesser, sodass Rohrschellen für unterschiedliche Durchmesser nicht mehr benötigt werden. Die installierten Rohre werden stabil und spielfrei gehalten, sodass Vibrationen der installierten Rohre und Geräuschentwicklungen weitgehend unterdrückt werden.

Die Installationsarbeiten erfolgen in voneinander unabhängigen einfachen Installationsschritten, die bequem, gegebenenfalls auch nur mit einer Hand schnell oder fast automatisch vollzogen werden können. Besonders vorteilhaft ist, dass mit nur einem Installationsschritt eine provisorische Installation des zu installierenden Rohrs möglich ist.

Die verschiedenen Installationsschritte können manuell ohne Werkzeug ausgeführt werden. Das Verschlussteil kann mit einem Handgriff geöffnet werden, um das Rohr einzulegen. In der Folge kann das Verschlussteil zurückgeführt werden oder es fällt automatisch in die Ursprungslage zurück, sodass eine fast automatische Sicherung möglich ist. Das Arretierteil kann wiederum manuell nach unten gefahren und durch manuelle Betätigung von Fixierelementen, vorzugsweise Flügelmuttern, fixiert werden.

Die Installation eines Rohrs gelingt insbesondere auch dann einfach und sicher, wenn das Rohr an einer exponierten Lage und unter schlechten Lichtverhältnissen von einem Monteur installiert werden muss, der z.B. auf einer Leiter steht. Da die Installationsschritte getrennt voneinander ausgeführt werden können, benötigt der Installateur grundsätzlich nur eine freie Hand, um das Rohr zu installieren. Aufgrund einer klaren Trennung einfach ausführbarer Installationsschritte kann die Installation der Rohre schnell und sicher ausgeführt werden.

Das Arretierteil der Rohrschelle kann in unterschiedlichen Ausgestaltungen vorteilhaft realisiert werden.

In einer ersten vorzugsweisen Ausgestaltung ist vorgesehen, dass das Seitenstück des Montageteils und das Verschlussteil je einen Längsschlitz aufweisen, entlang denen gegebenenfalls miteinander verbundene Führungselemente des Arretierteils verschiebbar sind, und dass das Verschlussteil eine Eintrittsöffnung aufweist, durch die hindurch das zugewandte Führungselement des Arretierteils in den Längsschlitz des Verschlussteils einführbar ist. In dieser Ausgestaltung ist das Arretierteil zusammen mit dem Niederhalter verschiebbar, um ein installiertes Rohr zu fixieren.

Die Möglichkeit, das Arretierteil über eine grössere Distanz gegen das Fussstück des Montageteils zu verschieben, erlaubt die Installation von Rohren und Leitungen mit Durchmessern, die in einem weiten Bereich, gegebenenfalls um ein Mehrfaches variieren. Zum sicheren Halten der Rohre und Leitungen unterschiedlicher Durchmesser sind das Arretierteil und/oder das Fussstück des Montageteils zumindest teilweise V-förmig oder U-förmig ausgebildet.

In einer zweiten vorzugsweisen Ausgestaltung ist vorgesehen, dass das Arretierteil eine vom Montageteil drehbar und unverschiebbar gehaltene Gewindestange mit Stangenenden aufweist, die je durch eine Gewindeverbindung derart mit Endteilen des Niederhalters verbunden sind, dass diese bei einer Drehung der Gewindestange gegeneinander oder auseinander verschoben werden und der Niederhalter dadurch nach unten oder nach oben verschoben, ausgelenkt oder gebogen wird.

Die ortsfeste Montage des Arretierteils erlaubt einen sehr kompakten Aufbau der Rohrschelle.

In einer dritten vorzugsweisen Ausgestaltung kann der Niederhalter einerseits am Montageteil oder am Verschlussteil eingehängt und andererseits am Verschlussteil oder Montageteil fixiert werden.

Vorzugsweise ist vorgesehen, dass das Seitenstück des Montageteils wenigstens ein erstes Verbindungsteil aufweist, mit dem ein erstes Endteil des Niederhalters an einer Position oder an einer von mehreren Positionen des Seitenstücks gegebenenfalls mittels einer Rastverbindung verbindbar ist, und dass das Verschlussteil wenigstens ein zweites Verschlussteil aufweist, mit dem ein zweites Endteil des Niederhalters an einer Position oder an einer von mehreren Positionen des Verschlussteils gegebenenfalls mittels einer Rastverbindung verbindbar ist.

Auf diese Weise kann die Rohrschelle einfach an unterschiedliche Rohrdurchmesser angepasst werden. Zudem kann der Niederhalter besonders einfach arretiert werden, indem das betreffende Endteilen an Verbindungsteilen vorbeigeführt wird, bis das installierte Rohr fixiert ist und dass Endteil des Niederhalters an einem Verbindungsteil arretiert ist.

Die Verbindungsteile können einfach in das Montageteil, insbesondere das Seitenstück, und in das Verschlussteil eingearbeitet werden. Z.B. wird am Seitenstück oder am Verschlussteil eine Reihe von schlitzförmigen Aufnahmeöffnungen vorgesehen, in die der Niederhalter wahlweise eingesetzt werden kann. Aus dem Verschlussteil oder dem Seitenstück können ferner Rastelemente ausgeschnitten und ausgebogen werden, über die das betreffende Endteil geführt wird, bis es einrastet.

In allen beschriebenen Ausgestaltungen werden das Arretierteil und/oder das Fussstück des Montageteils vorzugsweise elastisch ausgebildet und/oder mit elastischen Elementen z.B. aus Kunststoff oder Gummi versehen, welche gewährleisten, dass die installierten Rohre spielfrei und schonend gehalten werden. Schwingungen und Geräusche der installierten Rohre werden gedämpft, sodass störende Emissionen vermieden werden.

Vorteilhaft ist ferner, dass die Elemente der Rohrschelle kostengünstig gefertigt und in einfacher Weise zusammengebaut werden können. Das Montageteil, das Verschlussteil und das Arretierteil können aus einem Blechstück bzw. einem Blechstreifen gebogen werden. Vorzugsweise werden die genannten Teile, insbesondere das Montageteil und/oder das Verschlussteil durch Verformungen versteift, sodass auch schwere Rohre vom Montageteil sicher gehalten werden können.

Das C-förmige Montageteil kann durch Zusammenfügen von zwei L-förmigen Montageteilelementen, von denen eines das Kopfstück und das andere das Fussstück des Montageteils bildet, gefertigt werden. Die mit einfachen Maschinen gefertigten Montageteilelemente können z.B. durch Toxen, Schrauben oder Schweissen miteinander verbunden werden.

Die Führungselemente des Arretierteils, die in den Längsschlitzen des Verschlussteils und des Seitenstücks des Montageteils geführt sind, sind vorzugsweise separate Schrauben, Schraubenelemente, Gewindebolzen oder Stangenenden einer Gewindestange, die je mit einem Gewinde versehen sind. Die Schrauben, Schraubenelemente oder Stangenenden der Gewindestange sind mit Schraubenmuttern, vorzugsweise Flügelschrauben versehen, die manuell festgezogen werden können. Das Arretierteil kann daher beidseitig mit Schraubenelementen, Gewindebolzen oder dergleichen oder mit einer durchgehenden Gewindestange versehen sein, von der eine Niederhalter gehalten wird. Die Verwendung einer Gewindestange verleiht der Rohrschelle eine höhere Stabilität und gleichzeitig eine höhere Flexibilität. Die Gewindestange kann in einfacher Weise durch Öffnungen in den Endteilen des Niederhalters hindurch geschoben werden.

Das dem Verschlussteil zugewandte Führungselement kann in den Längsschlitz im Verschlussteil eingeführt werden, wenn dieses in die Verschlussstellung gedreht wird. Dazu weist das Verschlussteil eine Eintrittsöffnung auf, die in sich geschlossen oder zur Seite hin geöffnet ist.

In einer bevorzugten Ausgestaltung weist die in sich geschlossene Eintrittsöffnung eine an das Fixierelement, gegebenenfalls die Flügelmutter, angepasste Form auf, die es erlaubt, das Fixierelement durch die Eintrittsöffnung hindurch zu führen. Vorzugsweise ist die Eintrittsöffnung eine Schlüssellochöffnung, die es erlaubt, das Führungselement mit dem Fixierelement, gegebenenfalls der Flügelmutter, hindurch führen, und anschliessend in den an die Eintrittsöffnung anschliessenden Längsschlitz einzuführen. Eine in sich geschlossene Eintrittsöffnung, die praktisch zu keiner Schwächung des Verschlussteils führt, wird vorzugsweise verwendet, wenn das Verschlussteil frontal gegen das Führungselement geführt wird, sodass das Führungselement, z.B. der Gewindebolzen oder die Gewindestange, axial durch die Eintrittsöffnung hindurch treten kann.

In weiteren vorzugsweisen Ausgestaltungen ist das Verschlussteil seitlich gegen das Führungselement drehbar. In diesen Ausgestaltungen ist die Eintrittsöffnung zur Seite des Verschlussteils hin geöffnet. Das Führungselement, z.B. der Gewindebolzen oder Gewindestange, kann dadurch seitlich in die Eintrittsöffnung und dann geneigt oder senkrecht dazu in den Längsschlitz im Verschlussteil eingeführt werden.

Vorzugsweise ist vorgesehen, dass der obere Anschlag des Längsschlitzes im Seitenstück derart gewählt ist, dass das Arretierteil an diesem Anschlag mit dem betreffenden Führungselement derart gehalten ist, dass dieses bei einer Drehung des Verschlussteils automatisch in die Eintrittsöffnung eintritt. Die Rohrschelle wird vorzugsweise mit einem entsprechend positionierten und fixierten Arretierteil ausgeliefert, sodass keine weiteren Vorbereitungen zur Installation erforderlich sind.

In vorzugsweisen Ausgestaltungen weist das erste Endstück des Verschlussteils eine Längsöffnung auf, in der das bolzenförmige erste oder zweite Kopplungsteil des Montageteils derart gehalten ist, dass das Verschlussteil axial verschiebbar ist. Das Verschlussteil kann daher nicht nur gedreht sondern auch axial verschoben werden, um das zweite Endstück des Verschlussteils mit dem zweiten oder ersten Kopplungsteil des Montageteils zu verbinden.

Das zweite Endstück des Verschlussteils ist vorzugsweise hakenförmig, bolzenförmig oder gabelförmig ausgebildet und mit dem zugeordneten ersten oder zweiten Kopplungsteil des Montageteils vorzugsweise kraftschlüssig oder formschlüssig verbindbar. Nach der formschlüssigen oder kraftschlüssigen Verbindung des Verschlussteils mit dem ersten oder zweiten Kopplungsteil kann die auf das Fussstück des Montageteils Montageteil einwirkende Last in das Verschlussteil eingeleitet und auf dieser Seite zum Kopfstück des Montageteils übertragen werden. Das Montageteil bildet mit dem Verschlussstück daher vorzugsweise einen in sich geschlossenen Rahmen, der das installierte Rohr einschliesst und dessen Last optimal aufnimmt.

Besonders vorteilhaft ist, dass nach der Fixierung des Arretierteils das Verschlussteil in der Verschlussstellung arretiert ist. Durch das Arretierteil wird daher einerseits das installierte Rohr und andererseits das Verschlussteil arretiert.

Die Teile der Rohrschelle, das Montageteil, das Verschlussteil und das Arretierteil, spielen daher vorteilhaft zusammen, sodass verschiedene synergistische Effekte resultieren. Das Montageteil stellt wesentliche Funktionen zum Halten des installierten Rohres bereit und muss lediglich verschlossen werden. Das Verschlussteil, das zum Verschliessen des Montageteils dient, stellt gleichzeitig einen Längsschlitz zur Führung des Arretierteils zur Verfügung und das Arretierteil kann vorteilhaft zur Arretierung des Verschlussteils verwendet werden. Durch diese synergistischen Funktionen können mit einer einfachen Struktur der Rohrschelle zahlreiche weitere Vorteile realisiert werden. Aufgrund der Realisierung mehrerer Funktionen resultiert eine besonders einfache Ausgestaltung der Rohrschelle mit nur wenigen Vorrichtungsteilen.

In vorzugsweisen Ausgestaltungen sind das erste Kopplungsteil und/oder das zweite Kopplungsteil und/oder das erste und/oder zweite Endstück des Verschlussteils mit Gelenkelementen und/oder Scharnierelementen und/oder Blockierelementen und/oder Rastelementen versehen. Das zweite Endstück des Verschlussteils ist vorzugsweise mit einem elastischen Rastelement versehen, welches am zugewandten Kopfstück oder Fussstück des Montageteils Einrasten kann. Das erste Endstück und das zugewandte Kopfstück oder Fussstück des Montageteils weisen vorzugsweise zueinander korrespondierende Gelenkelemente oder Scharnierelemente auf, die, gegebenenfalls nach Verbindung mit einem Bolzen, ein Gelenk bilden.

Nachfolgend wird die Erfindung anhand von Zeichnungen näher erläutert. Dabei zeigt:
- Fig. 1a: die eingangs beschriebene bekannte Rohrschelle 7 in verschlossenem Zustand;
- Fig. 1b: die bekannte Rohrschelle 7 von Fig. 1a während der Installation eines Rohres 8;
- Fig. 2a: eine erfindungsgemässe Rohrschelle 1 in einer ersten Ausgestaltung mit einem C-förmig ausgebildeten Montageteil 2, das ein Kopfstück 21, ein Seitenstück 22 und ein Fussstück 23 aufweist, und das durch ein Verschlussteil 3 abschliessbar ist, dessen erstes Endstück 31 drehbar mit dem Fussstück 23 verbunden ist, und mit einem Arretierteil 4, welches in Längsschlitzen 220, 330 des Montageteils 2 und des Seitenstücks 22 verschiebbar gehalten und gegen ein installiertes Rohr 8 geführt ist, welches entlang einer Rohrachse x ausgerichtet ist;
- Fig. 2b: die Rohrschelle 1 von Fig. 2a mit dem in einer Ebene parallel zur Rohrachse x gegen das Kopfstück 21 des Montageteils 2 gedrehten Verschlussteil 3;
- Fig. 2c: die Rohrschelle 1 von Fig. 2a mit dem nach unten gedrehten und vom Montageteil 2 gelösten Verschlussteil 3 sowie dem nach oben gefahrenen Arretierteil 4 mit einem in den Montageraum 10 eingeführten Rohr 8;
- Fig. 3a: eine Rohrschelle 1 in einer vorzugsweisen Ausgestaltung mit einem Verschlussteil 3, welches mit dem ersten Endstück 31 drehbar mit dem Kopfstück 21 des Montageteils 2 verbunden und mit dem zweiten Endstück 32 nach vorn gedreht ist;
- Fig. 3b: die Rohrschelle 1 von Fig. 3a mit dem in einer Ebene parallel zur Rohrachse x in die Verschlussstellung gedrehten Verschlussteil 3;
- Fig. 4a: eine Rohrschelle 1 in einer weiteren vorzugsweisen Ausgestaltung mit einem Verschlussteil 3, welches mit dem ersten Endstück 31 drehbar mit dem Kopfstück 21 des Montageteils 2 verbunden und mit dem zweiten Endstück 32 in einer Ebene senkrecht zur Rohrachse x nach rechts gedreht ist;
- Fig. 4b: die Rohrschelle 1 von Fig. 4a mit dem eingerasteten Verschlussteil 3 in Verschlussstellung;
- Fig. 5: den oberen Teil einer vorzugsweise ausgestalteten Rohrschelle 1 mit einem Montageteil 2, dessen Kopfstück 21 mit einer Schlüssellochöffnung 210 versehen ist;
- Fig. 6a: ein vorzugsweise ausgestaltetes Arretierteil 4, welches z.B. an den in Fig. 5 gezeigten Teil des Montageteils 2 anschliesst und eine Gewindestange 45 aufweist, die vom Montageteil 2 drehbar gehalten ist;
- Fig. 6b: das Arretierteil 4 mit dem nach unten gedrückten Niederhalter 42 von Fig. 6a, dessen Endteile 41 durch Drehung der Gewindestange 45 gegeneinander verschoben wurden;
- Fig. 7a: eine erfindungsgemässe Rohrschelle 1 in einer weiteren vorzugsweisen Ausgestaltung mit einem vorzugsweise elastischen Niederhalter 42, der am Seitenstück 22 des Montageteils 2 wahlweise in eine Schlitzöffnung 220 eingesetzt, und am Verschlussteil 3 an einer passenden Position eingerastet werden kann;
- Fig. 7b: die Rohrschelle 1 von Fig. 7a nach dem Einsetzen des Rohrs 8 und dem Verschliessen des Verschlussteils 3; und
- Fig. 7c: die Rohrschelle 1 von Fig. 7b beim Fixieren des Rohrs 8 mittels des elastischen Niederhalters 42.

Fig. 1a zeigt eine bekannte Rohrschelle 7, wie sie eingangs beschrieben wurde, mit zwei Schalen 71, 72, die mittels einer ersten und einer zweiten Schraube 791, 792 miteinander verwendbar sind. Die Schrauben 79 werden entweder in Schraubenmuttern oder, wie in Fig. 1a, in Gewindehülsen 719 eingedreht, die an der ersten Schale 71 vorgesehen sind. Die erste Schale 71 ist mit einem Montagestück 73 verbunden, das das z.B. an einem Ausleger montiert wird. Ferner ist gezeigt, dass die Schalen 71, 72 mit elastischen Lagerelementen 70 versehen sind, die der schonenden Lagerung eines aufgenommenen Rohres dienen.

Fig. 1b zeigt, dass zur Montage eines Rohres 8 die zweite Schale 72 einseitig gelöst und weggedreht wird, um das Rohr 8 in die erste Schale 71 einzulegen. Zum Verschliessen der Rohrschelle 7 wird die zweite Schale 72, die einseitig mittels der ersten Schraube 791 mit der ersten Schale 71 verbunden ist, zurückgedreht und mittels der zweiten Schraube 792 auf der anderen Seite mit der ersten Schale 71 verbunden. Bei diesem Vorgang wird das Rohr 8, wie in Fig. 1b gezeigt, mit einer Hand gehalten, während die zweite Schale 72 mit der anderen Hand zurückgedreht wird. Da die erste Schraube 791 nur wenig gelöst ist, stösst die zweite Schale 72 beim Zurückdrehen an das eingesetzte Rohr 8 an und muss daher weiter gelöst oder nach unten gebogen werden, bis die Drehung vollzogen werden kann. Anschliessend wird die zweite Schraube 792 wieder befestigt. Die der beschriebene Montagevorgang ist daher wenig vorteilhaft.

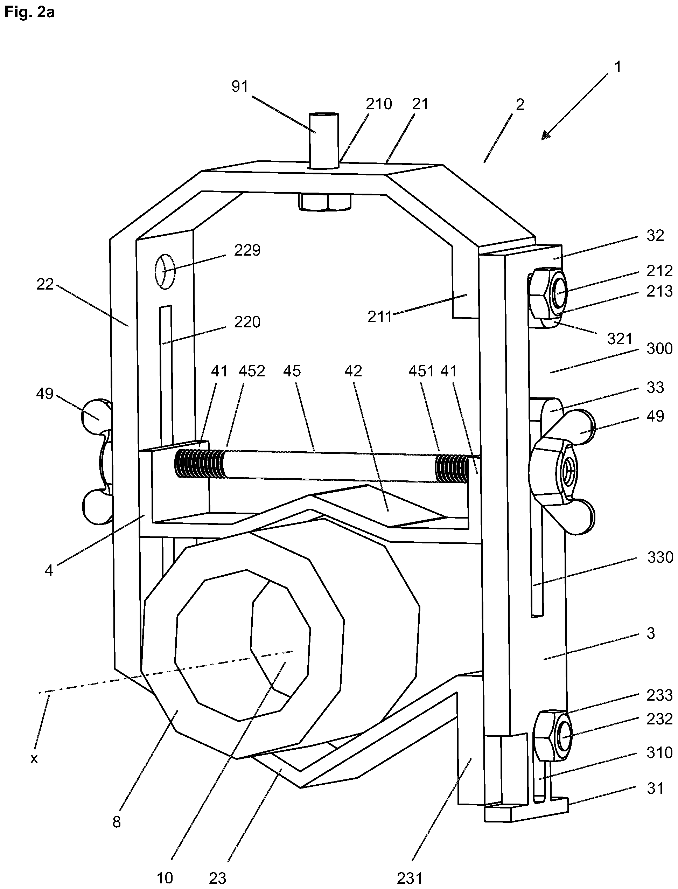

Fig. 2a zeigt eine erfindungsgemässe Rohrschelle 1 in einer ersten Ausgestaltung mit einem bereits installierten und entlang seiner Längsachse bzw. Rohrachse x ausgerichteten Rohr 8 bzw. einer Leitung oder dergleichen. Die Rohrschelle 1 umfasst ein Montageteil 2, das der Aufnahme des Rohres 8 in einem Montageraum 10 dient, ein Verschlussteil 3, mittels dessen das Montageteil 2 verschliessbar ist, und ein verschiebbares und fixierbares Arretierteil 4 mit einem Niederhalter 42, mittels dessen das Rohr 8 im Montageraum 10 spielfrei arretierbar ist. Das Montageteil 2, das Verschlussteil 3 und der Niederhalter 42 des Arretierteils 4 sind vorzugsweise aus einem Blechstreifen ausgeschnitten und gebogen, der z.B. eine Breite im Bereich von 1 cm - 3 cm und z.B. eine Dicke von 1 mm - 3 mm aufweist. Die Rohrschelle 1 kann daher mit geringem Aufwand gefertigt werden.

Das Montageteil 2 ist C-förmig ausgebildet und weist ein Kopfstück 21, ein Seitenstück 22 und ein Fussstück 23 auf. Das Kopfstück 21 weist eine Montageöffnung 210 auf, in der eine Montageschraube 91 gehalten ist. Die Montageöffnung 210 weist vorzugsweise die Form einer Schlüssellochöffnung auf, die es erlaubt, die Montageschraube 91 einzuhängen.

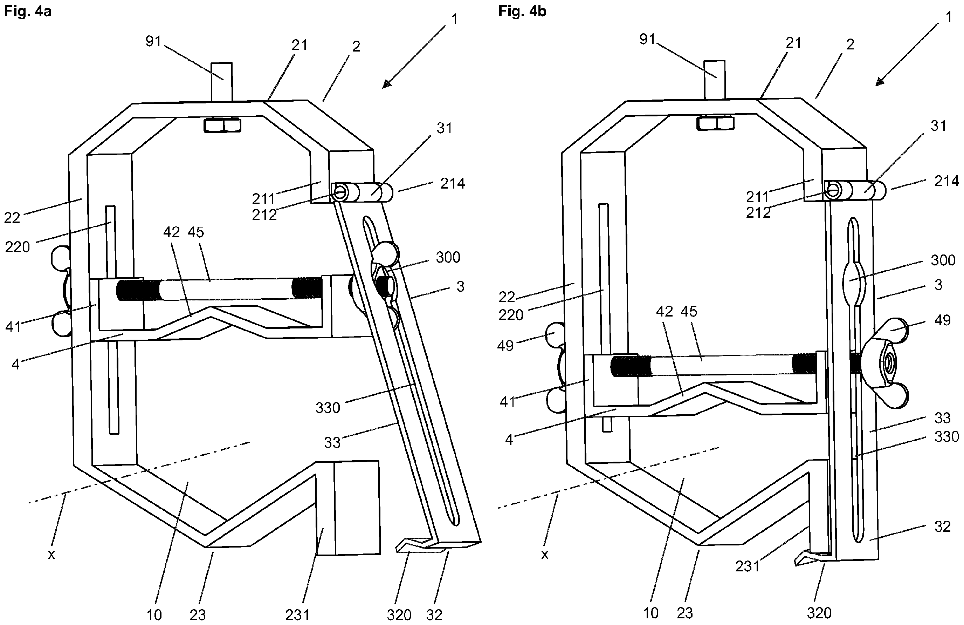

Auf der dem Seitenstück 22 abgewandten Seite weist das Kopfstück 21 ein erstes Kopplungsteil 211 mit einem Gewindebolzen 212 auf. Auf den Gewindebolzen 212 ist vorzugsweise eine Schraubenmutter 213 aufgesetzt. Der fest montierte Gewindebolzen 212 könnte auch mit einem Bolzenkopf versehen sein. Alternativ könnte das erste Kopplungsteil 211 auch zu einem Haken geformt sein. Der Gewindebolzen 212 kann auch fehlen (siehe Fig. 4a).

Das Seitenstück 22 weist einen senkrecht zur Rohrachse x verlaufenden Längsschlitz 220 und eine vorzugsweise vorgesehene Montageöffnung 229 auf. Die Montageschraube 91 kann daher auch in Montageöffnung 229 am Seitenstück 22 eingesetzt werden, um das Montageteil 2 bzw. die Rohrschelle 1 seitlich zu befestigen.

Das Fussstück 23 weist ein nach unten weisendes zweites Kopplungsteil 231 mit einem Montagebolzen 232 auf, an dem vorzugsweise eine Schraubenmutter 233 vorgesehen ist. Der Gewindebolzen 233 kann ferner anstelle der Schraubenmutter 233 einen Bolzenkopf aufweisen oder vollständig fehlen (siehe Fig. 4a).

Das C-förmig ausgebildete Montageteil 2 weist eine dem Seitenstück 22 gegenüberliegende Öffnung auf, die mittels des stabförmigen oder plattenförmigen Verschlussteils 3 abschliessbar ist, sodass das Montageteil 2 zusammen mit dem Verschlussteil 3 praktisch einen in sich geschlossenen Rahmen bildet. Das erste Endstück 31 des Verschlussteils 3 ist dazu mit dem Fussstück 23 des Montageteils 2 drehbar verbunden und mit dem zweiten Endstück 32 mit dem Kopfstück 21 des Montageteils 2 kraftschlüssig und/oder formschlüssig verbindbar. Nach dem Verschliessen der Rohrschelle 1 werden die einwirkenden Kräfte zu gleichen Teilen über den Rahmen bzw. das Seitenstück 22 des Montageteils 2 und das Verschlussteil 3 zum Kopfstück 21 des Montageteils 2 übertragen.

Der am Fussstück 23 des Montageteils 2 vorgesehene Gewindebolzen 233 ist ein Gelenkbolzen, der durch eine Längsöffnung 310 im ersten Endstück 31 des Verschlussteils 3 geführt ist, das in einer Ebene drehbar ist, die parallel zur Rohrachse x verläuft. Im ersten Endstück 31 des Verschlussteils 3 ist zudem eine Längsöffnung 310 vorgesehen, die es erlaubt, was Verschlussteil 3 nicht nur zu drehen, sondern auch axial zu verschieben.

Das zweite Endstück 32 des Verschlussteils 3 ist hakenförmig ausgebildet und mit einem hakenförmigen Element 321 versehen, das in den Gewindebolzen 212 am Kopfstück 21 des Montageteils 2 eingehängt ist. Der Vorgang des Einhängens und Aushängens des zweiten Endstücks 32 wird durch die Längsöffnung 310 ermöglicht, die es erlaubt, das Verschlussteil 3 in axialer Richtung zu verschieben und vom Gewindebolzen 212 zu lösen. Durch das Einhängen des Hakens 321 wird das Montageteil 2 verschlossen. Ferner wird sichergestellt, dass die Last des installierten Rohres 8 anteilsweise über das Verschlussteil 3 zum Kopfstück 21 des Montageteils 2 übertragen wird.

Das Verschlussteil 3 weist zudem ein Mittelteil 33 mit einer Eintrittsöffnung 300 und einem daran anschliessenden Längsschlitz 330 auf, der etwa entlang der Mittelachse des Verschlussteils 3 verläuft. Die Eintrittsöffnung 300 ist von der Seite des Verschlussteils 3 her zugänglich.

Im Längsschlitz 220 des Seitenstücks 22 des Montageteils 2 und im Längsschlitz 330 des Verschlussteils 3 ist eine Gewindestange 45 verschiebbar gehalten. Die Gewindestange 45 weist am Stangenende, das dem Verschlussteil 3 zugewandt ist, ein erstes Führungselement bzw. Gewindeelement 451 und am Stangenende, das dem Seitenstück 22 zugewandt ist, ein zweites Führungselement bzw. Gewindeelement 452 auf. Das erste Gewindeelement 451 ist durch den Längsschlitz 330 im Verschlussteil 3 hindurch geführt und mit einer Flügelmutter 49 verbunden. Das zweite Gewindeelement 452 ist durch den Längsschlitz 220 im Seitenstück 22 des Montageteils 2 hindurch geführt und mit einer Flügelmutter 49 verbunden. Die Gewindestange 45 bildet zusammen mit einem damit verbundenen Niederhalteteil 42 ein Arretierteil 4, mittels dessen ein in den Montageraum 10 eingesetztes Rohr 8 arretierbar ist.

Anstelle einer durchgehenden Gewindestange 45 können auch voneinander getrennte Gewindebolzen 212 in die Endteile 41 des Niederhalters 42 eingesetzt werden.

Das Niederhalteteil 42 weist ein Mittelteil und beidseits daran anschliessende Endteile 41 auf, die von der Gewindestange 45 durchstossen und gehalten sind.

Das in den Führungsschlitzen 220, 330 verschiebbar gehaltene Arretierteil 4 kann gegen das installierte Rohr 8 verschoben und mittels der Flügelmuttern 49 fixiert werden. Durch die V-Form des Niederhalters 42 und die V-Form des Fussstücks 23 des Montageteils 2, die in entgegengesetzte Richtungen weisen, können Rohre 8 mit unterschiedlichen Durchmessern spielfrei arretiert werden.

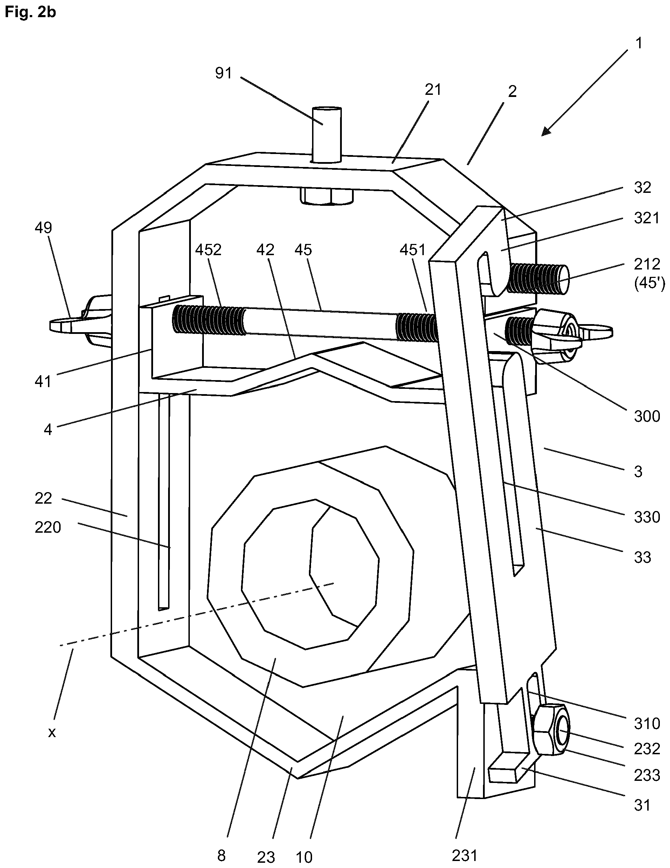

Fig. 2b zeigt die Rohrschelle 1 von Fig. 2a mit dem in einer Ebene parallel zur Rohrachse x gegen das Kopfstück 21 des Montageteils 2 gedrehten Verschlussteil 3. Sofern das Arretierteil 4 in die entsprechende Höhenlage verschoben wurde, kann das Verschlussteil 3 gegen das Kopfstück 21 des Montageteils 2 und gegen das Arretierteil 4 bzw. die Gewindestange 45 verschoben werden, deren erstes Stangenende 451 bei diesem Vorgang in die Eintrittsöffnung 300 des Verschlussteils 3 geführt wird. Das zweite Stangenende 452 der Gewindestange 45 ist bei diesem Vorgang vorzugsweise durch die zugehörige Flügelmutter 49 fixiert, weshalb das Arretierteil 4 nicht gehalten werden muss, während das Verschlussteil 3 gedreht wird.

Vorzugsweise ist der Längsschlitz 220 am Seitenstück 22 derart dimensioniert, dass das Arretierteil 4 zum oberen Anschlag gefahren werden kann, um das Verschlussteil 3 zu öffnen oder zu verschliessen. Z.B. werden die Rohrschellen 1 vom Hersteller in dieser Stellung ausgeliefert, sodass das Verschlussteil 3 ohne weitere Manipulationen geöffnet und nach Einlegen eines Rohrs 8 wieder verschlossen werden kann.

Nachdem die Gewindestange 45 bzw. das Gewindeelement 451 in die Eintrittsöffnung 300 eingeführt wurde, kann die Gewindestange 45 entlang den Längsschlitzen 220, 330 verschoben und mittels der Flügelmuttern 49 z.B. in der in Fig. 2a gezeigten Position fixiert werden.

Durch das Anziehen der Flügelmuttern 49 wird gleichzeitig das Verschlussteil 3 fixiert. Die Schraubenmuttern 213, 233 an den Gewindebolzen 212, 232 müssen daher nicht festgezogen werden und werden grundsätzlich nicht benötigt. Zur Sicherung des Verschlussteils 3 nach dem Lösen der Flügelmuttern 49 ist das Kopfstück 21 des Montageteils 2 und/oder das Fussstück 23 des Montageteils 2 vorzugsweise mit einem Halteelement versehen. z.B. sind Bolzen mit einem Bolzenkopf in das Kopfstück 21 und in das Fussstück 23 eingesetzt.

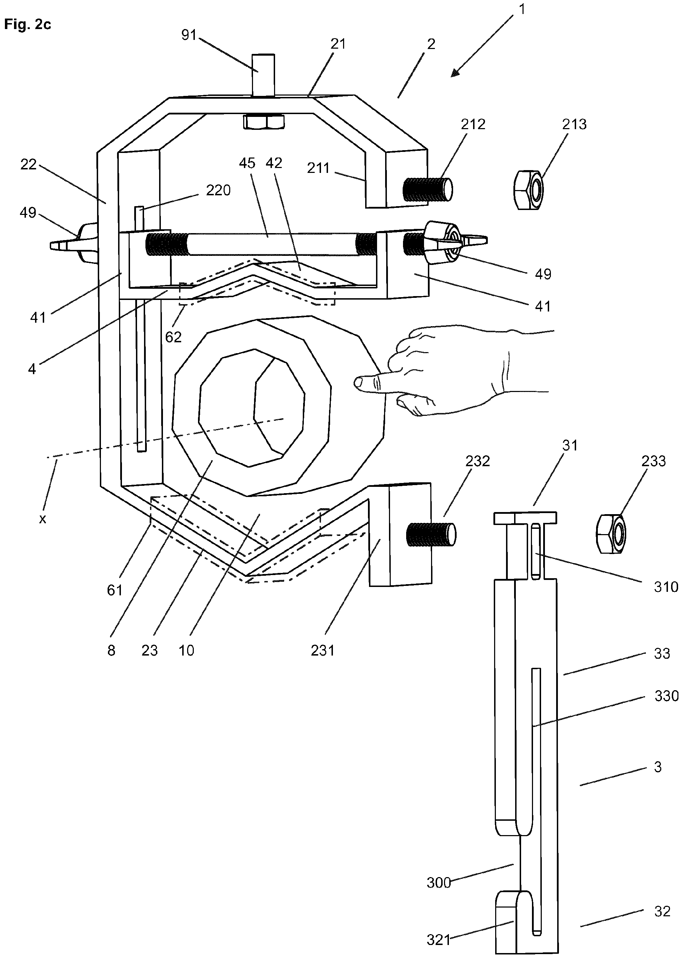

Fig. 2c zeigt die Rohrschelle 1 von Fig. 2a mit dem nach unten gedrehten und vom Montageteil 2 gelösten Verschlussteil 3 sowie dem nach oben gefahrenen Arretierteil 4 mit einem in den Montageraum 10 eingeführten Rohr 8. Wie erwähnt, weisen die Bolzen 212, 232 vorzugsweise einen Bolzenkopf auf, sodass das Verschlussteil 3 drehbar, aber axial nicht verschiebbar gehalten ist. Nach dem Öffnen der Rohrschelle 1 wird das Rohr 8 eingelegt und das Verschlussteil nach oben gedreht, wie dies in Fig. 2b gezeigt ist. Anschliessend wird das in den Längsschlitzen 220, 330 gehaltene Arretierteil 4 nach unten geführt, um das eingelegte Rohr 8 spielfrei zu arretieren. Die V-förmigen Teile des Niederhalters 42 und des Fussstücks 23 sind mit elastischen Elementen 61, 62 versehen, mittels denen das Rohr 8 schonend gehalten wird und Geräusche und Vibrationen absorbiert werden.

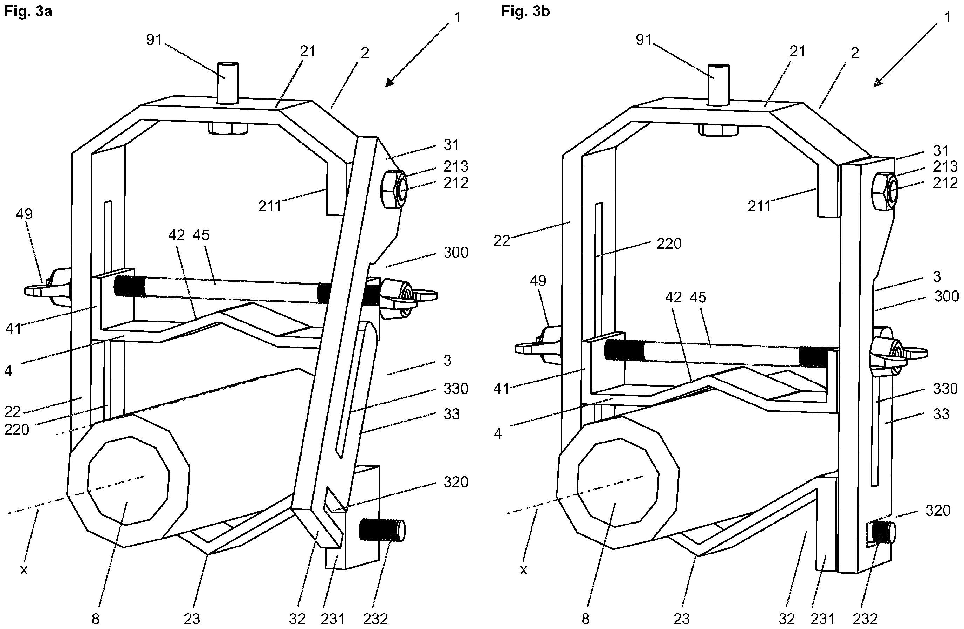

Fig. 3a zeigt eine Rohrschelle 1 in einer vorzugsweisen Ausgestaltung mit einem Verschlussteil 3, welches mit dem ersten Endstück 31 drehbar mit dem Kopfstück 21 des Montageteils 2 verbunden und mit dem zweiten Endstück 32, das gabelförmig ausgestaltet ist, nach vorn gedreht ist.

Fig. 3b zeigt die Rohrschelle 1 von Fig. 3a mit dem in einer Ebene parallel zur Rohrachse x in die Verschlussstellung gedrehten Verschlussteil 3. Das gabelförmig ausgestaltete zweite Endstück 32 umschliesst dabei den Bolzen 232 und nimmt dadurch die Last auf, die vom Rohr 8 auf das Fussstück 23 der Rohrschelle 1 ausgeübt wird.

Fig. 4a zeigt eine Rohrschelle 1 in einer weiteren vorzugsweisen Ausgestaltung mit einem Verschlussteil 3, welches mit dem ersten Endstück 31 drehbar mit dem Kopfstück 21 des Montageteils 2 verbunden und mit dem zweiten Endstück 32 in einer Ebene senkrecht zur Rohrachse x nach rechts gedreht ist. Das erste Kopplungsteil 211 und das erste Endstück 31 des Verschlussteils 3 sind durch ein Scharnier 214 bzw. einen parallel zur Rohrachse x ausgerichteten Bolzen 212 miteinander verbunden.

Die Eintrittsöffnung 300 am Verschlussteil 3 ist in sich geschlossen und als Schlüssellochöffnung ausgebildet, an die der Längsschlitz 330 anschliesst. Die als Schlüssellochöffnung ausbildete Eintrittsöffnung 300 ist an die Flügelmutter 49 angepasst, die durch die Eintrittsöffnung 300 hindurch treten kann, wie dies gezeigt ist. Nach Einführung in die Eintrittsöffnung 300 kann die Gewindestange 45 in den Längsschlitz 330 eingeführt und mit dem Arretierteil 4 nach unten verschoben werden.

Das Arretierteil 4 wird wiederum an passender Stelle fixiert, sodass das Verschlussteil 3 geöffnet oder geschlossen werden kann.

Das zweite Endstück 32 des Verschlussteils 3 ist mit einem Verbindungselements, gegebenenfalls Rastelement 320 versehen, welches am Fussstück 23 bzw. an dem daran vorgesehenen zweiten Kopplungsteil 231 ankoppeln bzw. einrasten kann. Die auf das Fussstück 23 einwirkende Last kann wiederum über das nach unten weisende zweite Kopplungsteil 231 auf das Verschlussteil 3 übertragen werden. Dieses Ausführungsbeispiel zeigt exemplarisch, dass das erste und zweite Endstück 31, 32 des Verschlussteils 3 beliebig ausgestaltet werden können, um eine Drehverbindung am ersten Endstück 31 bzw. eine formschlüssige oder kraftschlüssige Verbindung am zweiten Endstück 32 zu realisieren.

Fig. 4b zeigt die Rohrschelle 1 von Fig. 4a mit dem eingerasteten Verschlussteil 3 in Verschlussstellung.

Auch in dieser Ausgestaltung kann das Verschlussteil 3 mittels der Flügelmutter 49 fixiert werden, so das das Montageteil 2 und das Verschlussteil 3 einen geschlossenen Rahmen bilden, der erst nach Lösen der Flügelmutter 49 wieder geöffnet werden kann. Durch Bedienung des Arretierteils 4 werden somit wiederum das installierte Rohr 8 und das Verschlussteil 3 arretiert.

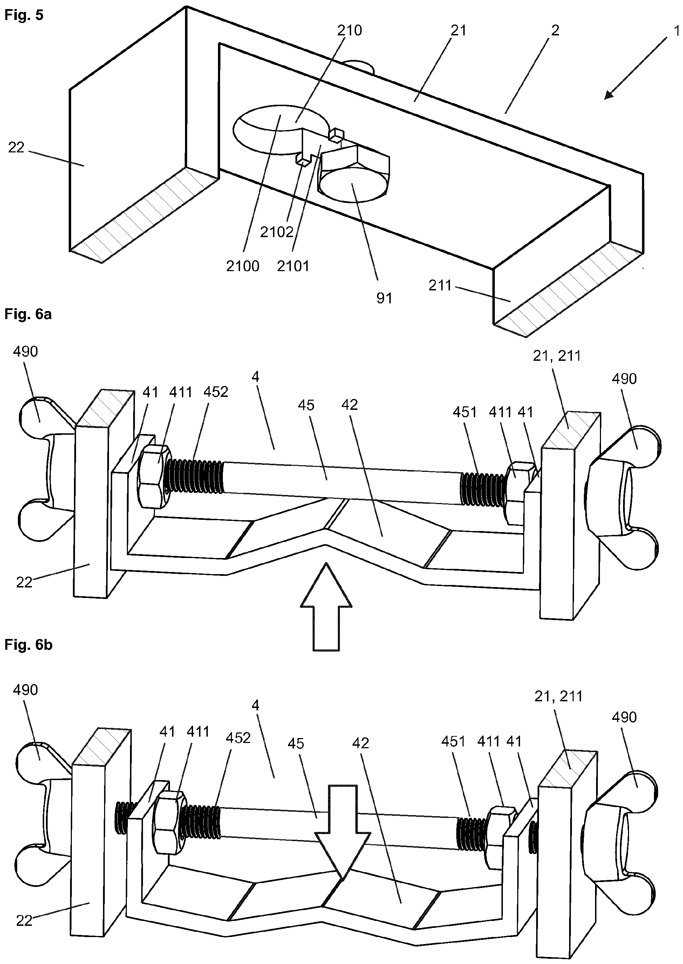

Fig. 5 zeigt den oberen Teil einer vorzugsweise ausgestalteten Rohrschelle 1 mit einem Montageteil 2, dessen gerade ausgerichtetes Kopfstück 21 mit einer Schlüssellochöffnung 210 versehen ist, in die der Kopf der Montageschraube 91 eingehängt werden kann.

Die Schlüssellochöffnung 210 weist ein Aufnahmeloch 2100 mit grösserem Durchmesser und einen daran anschliessenden Halteschlitz 2101 mit geringerem Durchmesser auf. Zwischen dem Aufnahmeloch 2100 und dem Halteschlitz 2101 sind Halteelemente 2102 vorgesehen. Die an der Decke vormontierte Montageschraube 91 kann durch das Aufnahmeloch 2100 hindurch geführt und mit dem Schraubenschaft seitlich in den Halteschlitz 2101 eingeführt werden. Bei diesem Vorgang wird der Schraubenkopf über die Halteelemente 2102 geführt, die in der Folge verhindern, dass sich der Schraubenkopf zurück zum Aufnahmeloch 2100 bewegen kann.

Fig. 6a zeigt ein vorzugsweise ausgestaltetes Arretierteil 4, welches z.B. an den in Fig. 5 gezeigten Teil des Montageteils 2 anschliesst und eine Gewindestange 45 aufweist, die vom Montageteil 2 drehbar gehalten ist. Die gezeigten Schnittstellen korrespondieren daher vorzugsweise zueinander. Das erste Endstück 31 des Verschlussteils 3 ist vorzugsweise drehbar mit der Gewindestange 45 verbunden. Z.B. ist das erste Endstück 31 von der Gewindestange 45 durchstossen und zwischen dem ersten Kopplungsteil 211 und dem mit der Gewindestange 45 verbundenen Drehteil 490 gehalten. Alternativ kann das zweite Endstück 32 des Verschlussteils 3 in der Ausgestaltung von Fig. 2a oder Fig. 3a vorliegen und zwischen dem ersten Kopplungsteil 211 und dem mit der Gewindestange 45 verbundenen Drehteil 490 mit der Gewindestange 45 gekoppelt oder daran eingehängt werden. Die Gewindestange 45 ersetzt in diesem Fall den Gewindebolzen 212 von Fig. 2b und ist vorzugsweise in dieser Höhe angeordnet und einerseits vom Seitenstück 22 und vom ersten Kopplungsteil 211 gehalten. Wie in Fig. 2b gezeigt, wird das zweite Endstück 32 des Verschlussteils 3 nun nicht mehr am Gewindebolzen 212, sondern an der Gewindestange 45' eingehängt. Alternativ kann das erste Kopplungsteil 211 wiederum einen Haken aufweisen, an dem das Verschlussteil 3 eingehängt werden kann. Vorzugsweise ist dieser Haken einstückig am ersten Kopplungsteil 211 angeformt oder daraus ausgeschnitten. Das Montageteil 2 und das damit verbundene Verschlussteil 3 bilden daher auch in dieser Ausgestaltung wieder einen in sich geschlossenen Rahmen, über den die Kräfte der einwirkenden Last übertragbar sind.

Die Gewindestange 45 weist Stangenenden 451, 452 mit gegenläufigen Gewinden auf. Die Schraubenmuttern 411, die fest mit den Endteilen 41 des Niederhalters verbunden sind, laufen bei einer Drehung der Gewindestange 45 daher gegeneinander oder auseinander. Die Schraubenmuttern 411 können in die Endteilen 41 des Niederhalters integriert oder formschlüssig damit verbindbar sein. Dazu können an den Endteilen 41 z.B. Halteelemente oder Flanschelemente vorgesehen sein, die die Schraubenmuttern 411 formschlüssig halten. Der Niederhalter 42 ist vorzugsweise ein federelastisches Blech, welches gegebenenfalls vorgespannt ist. z.in Fig. 6a ist der Niederhalter 42 daher in entspannter oder gespannter Lage gezeigt. Beim Drehen der Gewindestange 45 verschiebt bzw. verformt sich der Niederhalter 42 daher vorzugsweise in die in Fig. 6b gezeigte gespannte oder entspannte Lage.

Fig. 6b zeigt das Arretierteil 4 mit dem nach unten verformten Niederhalter 42 von Fig. 6a, dessen Endteile 41 mittels der Gewindestange 45 gegeneinander verschoben wurden. Die Drehung der Gewindestange 45 erfolgt manuell durch Betätigung von Drehteilen 490, die fest mit der Gewindestange 45 verbunden sind. Die Drehteile 490 können die Form von Flügelmutter oder Rändelmuttern, oder dergleichen, aufweisen.

Das Arretierteil 4 ist in dieser Ausgestaltung bei fest gehalten, während der Niederhalter 42 zur Fixierung eines installierten Rohres 8 deformierbar ist.

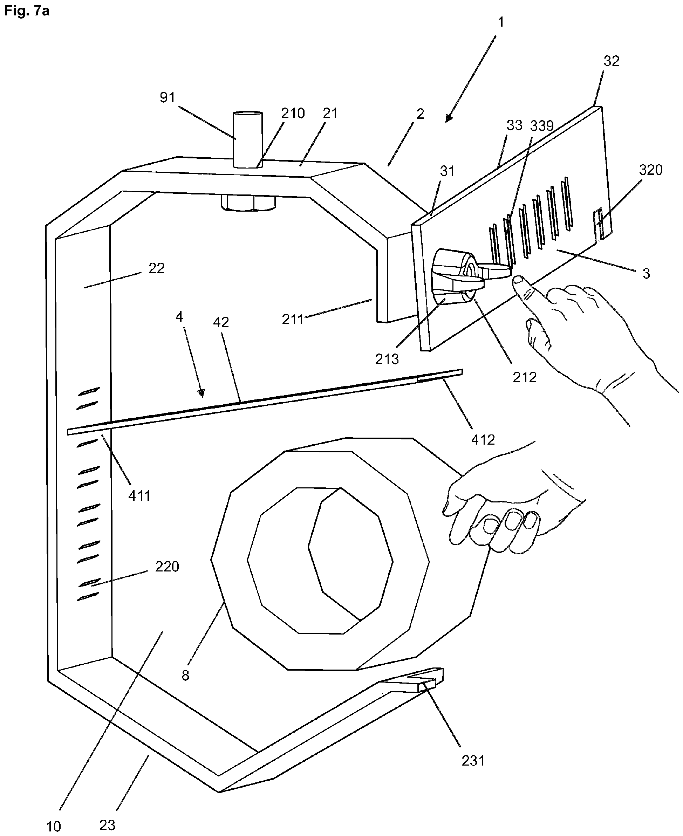

Fig. 7a zeigt eine erfindungsgemässe Rohrschelle 1 in einer weiteren vorzugsweisen Ausgestaltung mit einem Niederhalter 42, der am Seitenstück 22 des Montageteils 2 wahlweise in eine Schlitzöffnung 220 eingesetzt, und am Verschlussteil 3 an einer passenden Position arretiert, vorzugsweise eingerastet werden kann. Um eine Einrastfunktion zu realisieren ist der Niederhalter 42 und/oder das Verschlussteil 3 elastisch ausgebildet. Beispielsweise ist der Niederhalter 42 und/oder das Verschlussteil 3 als federelastische Platte ausgebildet.

Das Verschlussteil 3, welches um einen Bolzen 212 drehbar und vorzugsweise durch eine Flügelmutter 213 fixierbar ist, ist nach oben gedreht, sodass ein Rohr 8 in das C-förmige Montageteil 2 eingelegt werden kann. Die Verbindung zwischen dem Verschlussteil 3 und dem Montageteil 2 kann auch durch eine Niete realisiert werden.

Das Arretierteil 4 umfasst im wesentlichen einen plattenförmigen Niederhalter 42, welcher mit einem ersten Endteil 411 in eine von mehreren Schlitzöffnungen 220 im Seitenstück 22 des Montageteils 2 einsetzbar ist.

Aus dem Verschlussteil 3 ist vorzugsweise eine Reihe von Rastelementen 339 ausgeschnitten und ausgebogen, an denen das zweite Endteil 412 des plattenförmigen und biegeelastischen Niederhalters 42 eingerastet werden kann. Die Reihe der Rastelemente 331 weist vorzugsweise einen Sägezahnförmigen Verlauf auf, über den das zweite Endteil 412 des Niederhalters 42 geführt wird, bis es zwischen zwei Sägezähnen einrastet. Damit die Verschiebung über die Rampen des Sägezahnverlaufs möglich ist, ist der Niederhalter 42 und/oder das Verschlussteil 3 federelastisch ausgebildet. Nach dem Einrasten bis Niederhalters 42 ist dieser daher federelastisch gehalten.

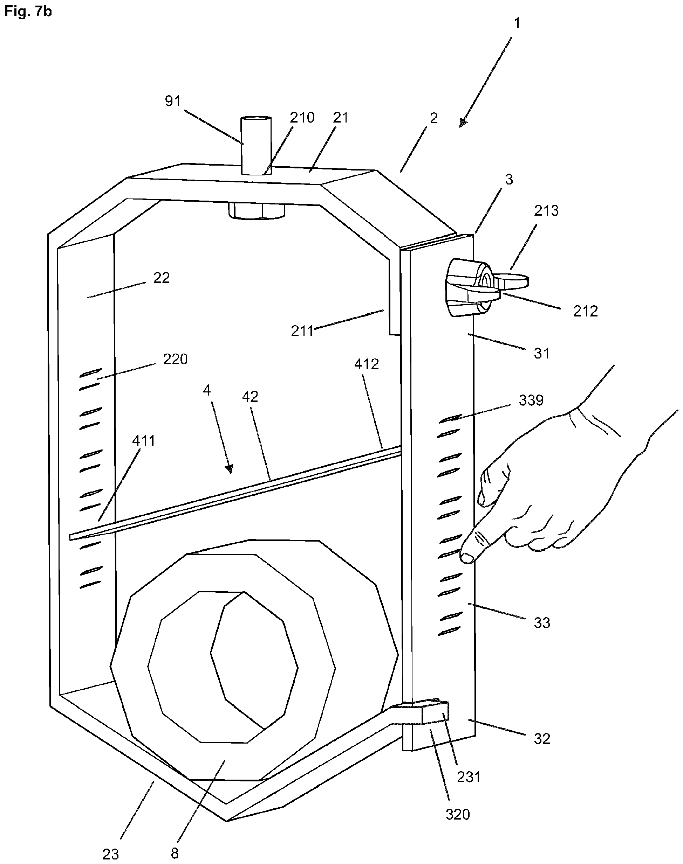

Fig. 7b zeigt die Rohrschelle 1 von Fig. 7a nach dem Einsetzen des Rohrs 8 und dem Verschliessen des Verschlussteils 3. Das zweite Endstück 32 des Verschlussteils 3 ist mit einem Verbindungselement 320 versehen, welches das am Fussstück 23 bzw. an dem daran vorgesehenen zweiten Kopplungsteil 231 zumindest teilweise umschliessen bzw. gegebenenfalls daran einrasten kann. In der gezeigten Ausgestaltung wird das Kopplungsteil 231 von einem Aufnahmeschlitz 23 aufgenommen. Das Ankoppeln, Verbinden oder Einrasten des Endstücks 32 an Kopplungsteil 231 erfolgt vorzugsweise automatisch, wenn das Verschlussteil 3 nach unten in die Endlage gedreht wird.

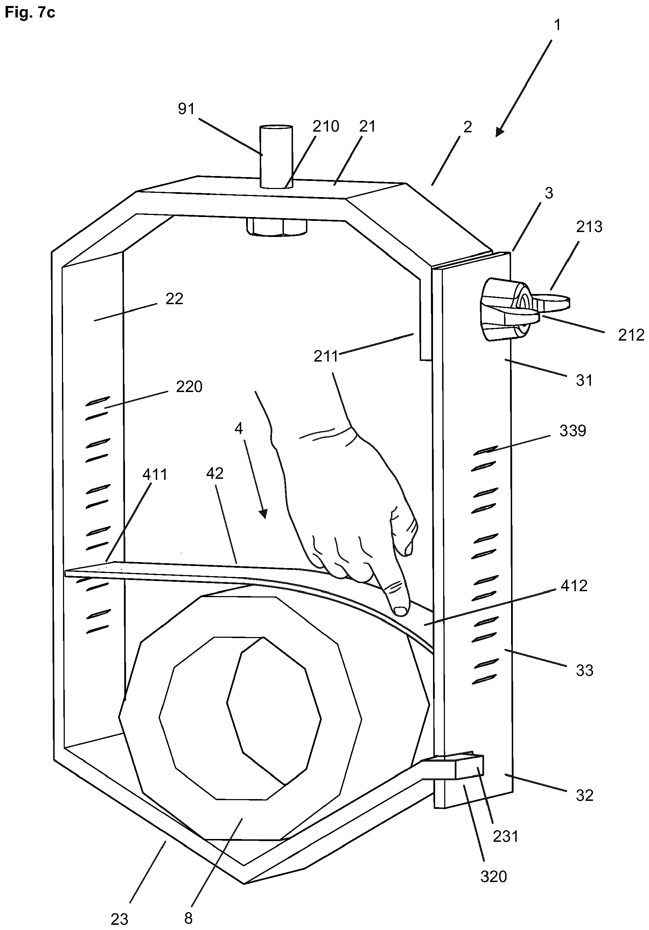

Fig. 7c zeigt die Rohrschelle 1 von Fig. 7b beim Fixieren des Rohrs 8 mittels des vorzugsweise elastischen Niederhalters 42. Aufgrund des geringen Rohdurchmessers ist das erste Endteil 411 des Niederhalters 42 in der Reihe der Schlitzöffnung 220 am Seitenstück 22 relativ weit unten positioniert. Das erste Endteil 411 weist vorzugsweise eine Zunge auf, die durch eine der Schlitzöffnungen 220 hindurch geführt und vorzugsweise leicht umgebogen ist, sodass sie selbsttätig gehalten ist. Das zweite Endteil 412 des Niederhalters 42 wird manuell über die Rastelemente 339 geführt, bis das Rohr 8 fixiert ist und das zweite Endteil 412 an einem der Verbindungselemente bzw. Rastelemente 339 gehalten ist. Vorzugsweise ist das Endteil 412 hakenförmig nach oben umgebogen, sodass es in eines der nach unten gebogenen Verbindungselemente bzw. Rastelemente 339 eingreifen kann. Mittels der erfindungsgemässen Rohrschelle können daher Rohre oder Leitungen beliebiger Art und beliebigen geometrischen Abmessungen mit geringem Aufwand und ohne Werkzeug rasch montiert und fixiert werden.

## Patentansprüche

1. Rohrschelle (1) mit einem Montageteil (2), das der Aufnahme wenigstens eines Rohres (8) in einem Montageraum (10) dient, mit einem Verschlussteil (3), mittels dessen das Montageteil (2) verschliessbar ist, und mit einem Arretierteil (4), das einen Niederhalter (42) aufweist, mittels dessen das Rohr (8) im Montageraum (10) arretierbar ist, **dadurch gekennzeichnet, dass** das Montageteil (2) zumindest annähernd C-förmig ausgebildet ist und ein mit einem ersten Kopplungsteil (211) versehenes Kopfstück (21) und ein mit einem zweiten Kopplungsteil (231) versehenes Fussstück (23), die durch ein Seitenstück (22) miteinander verbunden sind, umfasst und dass das Verschlussteil (3) ein mit dem ersten oder zweiten Kopplungsteil (211; 231) drehbar verbundenes erstes Endstück (31) und ein mit dem zweiten oder ersten Kopplungsteil (231; 211) koppelbares zweites Endstück (32) aufweist.

2. Rohrschelle (1) nach Anspruch 1, **dadurch gekennzeichnet, dass**, **dadurch gekennzeichnet, dass** das Seitenstück (22) des Montageteils (2) wenigstens ein erstes Verbindungsteil (220) aufweist, mit dem ein erstes Endteil (411) des Niederhalters (42) an einer Position oder an einer von mehreren Positionen des Seitenstücks (22) gegebenenfalls mittels einer Rastverbindung verbindbar ist und dass das Verschlussteil (3) wenigstens ein zweites Verbindungsteil (339) aufweist, mit dem ein zweites Endteil (412) des Niederhalters (42) an einer Position oder an einer von mehreren Positionen des Verschlussteils (330) gegebenenfalls mittels einer Rastverbindung verbindbar ist.

3. Rohrschelle (1) nach Anspruch 2, **dadurch gekennzeichnet,**
a) **dass** das erste Verbindungsteil (220) am Seitenstück (22) in der Ausgestaltung von einer oder mehreren vorzugsweise schlitzförmige ausgebildeten Öffnungen vorliegt und/oder das das zweite Verbindungsteil (339) am Verschlussteil (3) in der Ausgestaltung von einem oder mehreren Rastelementen vorliegt, oder
b) **dass** das erste Verbindungsteil (220) am Seitenstück (22) in der Ausgestaltung von einem oder mehreren Rastelementen vorliegt und/oder das das zweite Verbindungsteil am Verschlussteil (3) in der Ausgestaltung von einer oder mehreren vorzugsweise schlitzförmige ausgebildeten Öffnungen vorliegt.

4. Rohrschelle (1) nach Anspruch 1, **dadurch gekennzeichnet, dass**, das Seitenstück (22) des Montageteils (2) und das Verschlussteil (3) je einen Längsschlitz (220, 330) aufweisen, entlang denen gegebenenfalls miteinander verbundene Führungselemente (45, 451, 452) des Arretierteils (4) verschiebbar sind, und dass das Verschlussteil (3) eine Eintrittsöffnung (300) aufweist, durch die hindurch das zugewandte Führungselement (45) des Arretierteils (4) in den Längsschlitz (330) des Verschlussteils (3) einführbar ist.

5. Rohrschelle (1) nach einer der Ansprüche 1 - 4, **dadurch gekennzeichnet, dass** das Fussstück (23), das den Aufnahmeraum (10) nach unten begrenzt, zumindest annähernd V-förmig oder U-förmig ausgebildet ist und/oder, dass das Arretierteil (4), das den Aufnahmeraum (10) nach oben begrenzt, zumindest annähernd V-förmig oder U-förmig ausgebildet ist.

6. Rohrschelle (1) nach Anspruch 4 oder 5, **dadurch gekennzeichnet, dass** die Führungselemente (45, 451, 452) des Arretierteils (4) Schraubenelemente, wie separate Schrauben, Gewindebolzen oder Stangenenden (451, 452) einer gemeinsamen Gewindestange (45), sind, auf die Schraubenmuttern, vorzugsweise Flügelmuttern (49) aufgesetzt sind.

7. Rohrschelle (1) nach Anspruch 4, 5 oder 6, **dadurch gekennzeichnet, dass** die Eintrittsöffnung (300) am Verschlussteil (3) in sich geschlossen und vorzugsweise Teil einer Schlüssellochöffnung ist, oder dass die Eintrittsöffnung (300) am Verschlussteil (3) zu einer Seite des Verschlussteils (3) geöffnet ist.

8. Rohrschelle (1) nach einem der Ansprüche 4 - 7, **dadurch gekennzeichnet,**
**dass** das Verschlussteil (3) mit dem ersten Endstück (31) in einer Ebene, die zumindest annähernd senkrecht zu einer Montageachse (x) eines im Aufnahmeraum (10) gehaltenen Rohres (8) verläuft, derart drehbar mit dem Montageteil (2) verbunden ist, dass das zugewandte Führungselement (45, 451) des Arretierteils (4) zumindest annähernd senkrecht in die Eintrittsöffnung (300) eintreten kann, oder
**dass** das Verschlussteil (3) mit dem ersten Endstück (31) in einer Ebene drehbar mit dem Montageteil (2) verbunden ist, sodass das zugewandte Führungselement (45, 451) des Arretierteils (4) seitlich in die Eintrittsöffnung (300) eintreten kann.

9. Rohrschelle (1) nach einem der Ansprüche 4 - 8, **dadurch gekennzeichnet, dass** ein oberer Anschlag des Längsschlitzes (220) derart im Seitenstück (22) vorgesehen ist, dass das Arretierteil (4) an diesem Anschlag derart gehalten ist, dass das zugewandte Führungselement (45, 451) des Arretierteils (4) bei einer Drehung des Verschlussteils (3) automatisch in die Eintrittsöffnung (300) eintritt.

10. Rohrschelle (1) nach einem der Ansprüche 1 - 9, **dadurch gekennzeichnet, dass** erste Endstück (31) des Verschlussteils (3) eine Längsöffnung (310) aufweist, in dem das bolzenförmige erste oder zweite Kopplungsteil (232) des Montageteils (2) derart gehalten ist, dass das Verschlussteil (3) axial verschiebbar ist, um das zweite Endstück (32) des Verschlussteils (3) mit dem zweiten oder ersten Kopplungsteil (211, 212) des Montageteils (2) zu verbinden.

11. Rohrschelle (1) nach einem der Ansprüche 1-9, **dadurch gekennzeichnet, dass** das das zweite Endstück (32) des Verschlussteils (3) vorzugsweise hakenförmig, bolzenförmig oder gabelförmig ausgebildet und mit dem zugeordneten ersten oder zweiten Kopplungsteil (211, 231) gegebenenfalls durch eine Rastverbindung formschlüssig oder kraftschlüssig verbindbar ist.

12. Rohrschelle (1) nach einem der Ansprüche 1-5, **dadurch gekennzeichnet, dass** das durch ein gegebenenfalls fixierbares Drehgelenk mit dem Montageteil (2) verbundene Verschlussteil (3) derart drehbar ist, dass das erste oder zweite Endstück (32) des Verschlussteils (3) automatisch mit dem dem zweiten oder ersten Kopplungsteil (231; 211) verbindbar ist.

13. Rohrschelle (1) nach einem der Ansprüche 1-12, **dadurch gekennzeichnet, dass** das Arretierteil (4) eine vom Montageteil (2) drehbar und unverschiebbar gehaltene Gewindestange (45) mit Stangenenden (451, 452) aufweist, die je durch eine Gewindeverbindung derart mit Endteilen (41) des Niederhalters (42) verbunden sind, dass diese bei einer Drehung der Gewindestange (45) gegeneinander oder auseinander verschoben werden und der Niederhalter (42) dadurch nach unten oder nach oben verschoben oder gebogen wird.

14. Rohrschelle (1) nach einem der Ansprüche 1-13, **dadurch gekennzeichnet, dass** das erste Kopplungsteil (211) und/oder das zweite Kopplungsteil (231) und/oder das erste und/oder zweite Endstück (32) des Verschlussteils (3) mit Gelenkelementen und/oder Scharnierelementen und/oder Blockierelementen und/oder Rastelementen versehen sind.

15. Rohrschelle (1) nach einem der Ansprüche 1-14, **dadurch gekennzeichnet, dass** das Kopfstück (21) oder das Seitenstück (22) des Montageteils (2) eine vorzugsweise als Schlüssellochöffnung ausgebildete Montageöffnung (210) aufweist, in die für eine Montageschraube (91) einführbar ist.
